# FASCICULE DE BREVET EUROPEEN

(11) **EP 3 959 135 B1**
(45) Date de publication et mention de la délivrance du brevet: **20.12.2023**
(21) Numéro de dépôt: 20718355.9
(22) Date de dépôt: 20.04.2020
(51) Int. Cl.: B64D 33/02

(54) **ENTRÉE D'AIR DE NACELLE DE TURBORÉACTEUR**
LUFTEINLASS FÜR EINE TURBOJET-TRIEBWERKSGONDEL
AIR INTAKE FOR A TURBOJET ENGINE NACELLE

(30) Priorité: 26.04.2019 FR 1904427
(43) Date de publication de la demande: 02.03.2022
(73) Titulaire: Safran Nacelles, 76700 Gonfreville l'Orcher (FR)
(72) Inventeur: GUILLOIS, Denis, 77550 MOISSY CRAMAYEL (FR); QUENU, Fabienne, 77550 MOISSY CRAMAYEL (FR); MOUNIER, Anne, 77550 MOISSY CRAMAYEL (FR); ZAGANELLI, Franck, 77550 MOISSY CRAMAYEL (FR)
(74) Mandataire: Germain Maureau
(86) Numéro de dépôt international: PCT/EP2020/060990
(87) Numéro de publication internationale: WO 2020/216713

(56) Documents cités:
- EP-A2- 2 241 504
- WO-A1-2014/170609
- FR-A1- 3 031 341
- US-A1- 2011 014 044

## Description

La présente invention se rapporte à une entrée d'air de nacelle de turbomachine telle qu'un turboréacteur ou un turbopropulseur d'avion.

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une section amont formant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

L'entrée d'air sert à optimiser la captation d'air nécessaire à l'alimentation de la soufflante du turboréacteur dans toute l'enveloppe de vol et à canaliser l'air vers la soufflante.

L'entrée d'air comprend principalement une lèvre d'entrée d'air formant un bord d'attaque, rapportée sur une structure annulaire. La structure annulaire comprend un carénage externe assurant la continuité aérodynamique externe de la nacelle et un carénage interne assurant la continuité aérodynamique interne de la nacelle, notamment avec le carter de soufflante au niveau de la section médiane. La lèvre d'entrée d'air assure en amont la jonction entre ces deux carénages. Le carénage interne et le carénage externe sont généralement solidarisés à une cloison arrière qui délimite l'entrée d'air et la section médiane de la nacelle.

Dans des développements plus récents, la lèvre d'entrée d'air a été intégrée au carénage externe formant ainsi une pièce d'un seul tenant ou monobloc.

La pièce d'un seul tenant formant alors une lèvre d'entrée d'air allongée de la nacelle est notamment recherchée pour des raisons aérodynamiques, afin d'étendre vers l'aval la zone d'écoulement d'air laminaire.

La lèvre d'entrée d'air allongée peut être solidarisée à la cloison arrière directement ou indirectement par le biais d'une bride de fixation. De la même manière, le carénage interne peut être solidarisé à la cloison ou support arrière directement ou indirectement par le biais d'une bride de fixation ou d'une éclisse.

La lèvre d'entrée d'air allongée et le carénage interne sont solidarisés en amont au moyen de brides de fixation.

Ces brides de fixation ou éclisses assurent une rigidité mécanique entre la lèvre d'entrée d'air allongée et le carénage interne.

Un tel assemblage de la lèvre d'entrée d'air allongée avec le carénage interne présente l'inconvénient d'empêcher un écoulement optimal de l'air au niveau de la jonction entre la lèvre d'entrée d'air allongée et le carénage interne.

Par ailleurs, un tel assemblage nécessite la mise en position conforme de la lèvre d'entrée d'air allongée avec le carénage interne, puis la fixation de la lèvre d'entrée d'air allongée au carénage interne par l'intermédiaire d'une série de brides de fixation ou d'éclisses.

On comprendra alors qu'un tel assemblage nécessite de réaliser un grand nombre d'étapes d'assemblage induisant un coût de production onéreux.

De plus, du fait de l'utilisation de ces brides de fixation ou éclisses, la masse globale d'une telle entrée d'air s'en trouve augmentée.

L'invention a notamment pour but de pallier au moins l'un de ces inconvénients en proposant une entrée d'air permettant un écoulement laminaire de l'air optimal tout en simplifiant son architecture.

A ce titre selon un premier aspect, l'invention concerne une entrée d'air de nacelle de turboréacteur comprenant une structure annulaire et une cloison arrière, la structure annulaire comportant au moins une partie d'un carénage externe et un carénage interne joint l'un à l'autre par une lèvre d'entrée d'air, le carénage interne étant relié à la cloison arrière, l'entrée d'air étant remarquable en ce que la structure annulaire comportant ladite au moins une partie du carénage externe, la lèvre d'entrée d'air et le carénage interne est de continuité de matière et en ce que l'entrée d'air comprend en outre au moins une structure d'atténuation acoustique rapportée au carénage interne de la structure annulaire.

On entend par l'expression « de continuité de matière » des éléments mécaniques venus de matière. En d'autres termes, ces éléments mécaniques sont formés en une seule pièce et sont fabriqués d'un seul tenant.

Avantageusement, la cloison arrière est structurante c'est-à-dire qu'elle assure un chemin de reprise des efforts radiaux entre les éléments mécaniques auxquels elle est reliée, notamment entre le carénage interne et le carénage externe de l'entrée d'air. On comprendra par le terme « radial » une direction radiale par rapport à une direction longitudinale de la nacelle.

On comprendra alors que l'entrée d'air ainsi formée présente une lèvre d'entrée d'air formée au moins par la continuité de matière de la lèvre d'entrée d'air avec la carénage interne, étendue jusqu'à la cloison arrière à laquelle elle est reliée.

Bien évidemment, au moins une partie du carénage externe est également de continuité de matière avec la lèvre d'entrée d'air ci-dessus.

Ainsi, en prévoyant une entrée d'air dont la structure annulaire est formée en une unique pièce, on simplifie l'architecture de l'entrée d'air et on s'affranchit d'éléments de jonction, telle que des brides de fixation entre le carénage interne et la lèvre d'entrée d'air. En outre, le carénage interne de continuité avec la lèvre d'entrée d'air permet un écoulement laminaire de l'air s'écoulant le long de la lèvre d'entrée d'air et du carénage interne. La fabrication de l'entrée d'air s'en trouve par ailleurs simplifiée.

Selon une variante de réalisation, la structure annulaire et la lèvre d'entrée d'air sont en matériau composite

Selon une variante de réalisation, la structure annulaire et la lèvre d'entrée d'air sont en matériau métallique.

Selon une variante de réalisation, le carénage interne est directement relié à la cloison arrière.

Selon une variante de réalisation, le carénage interne est relié à la cloison arrière par le biais d'une bride de fixation arrière.

En d'autres termes, la lèvre étendue telle que définie peut être reliée directement à la cloison arrière ou indirectement à celle-ci par l'intermédiaire d'une bride de fixation arrière.

Selon une variante de réalisation, l'entrée d'air comprend une jonction intermédiaire reliée à ladite au moins une partie du carénage externe pour former le carénage externe, la jonction intermédiaire étant reliée à la cloison arrière.

Selon une variante de réalisation, ladite au moins une partie du carénage externe est directement relié à la jonction intermédiaire.

Selon une variante de réalisation, ladite au moins une partie du carénage externe est reliée à la jonction intermédiaire par le biais d'une bride de jonction.

Selon une variante de réalisation, la jonction intermédiaire est reliée directement à la cloison arrière.

Selon une variante de réalisation, la jonction intermédiaire est reliée à la cloison arrière par le biais d'une bride de jonction arrière.

Selon un mode de réalisation, ladite au moins une partie du carénage externe et la jonction intermédiaire sont de continuité de matière.

Selon ce dernier mode de réalisation, on comprendra alors que l'entrée d'air présente une lèvre d'entrée d'air, formée par la continuité de matière de la lèvre d'entrée d'air, d'une part avec le carénage interne, et d'autre part avec le carénage externe, étendue jusqu'à la cloison arrière à laquelle elle est reliée.

Selon une variante de réalisation, le carénage externe est directement relié à la cloison arrière.

Selon une variante de réalisation, le carénage externe est relié à la cloison arrière par le biais d'une bride de jonction arrière.

Dans un mode de réalisation, le carénage interne est perforé sur une zone recevant ladite au moins une structure d'atténuation acoustique rapportée et ladite au moins une structure d'atténuation acoustique rapportée est formée d'une âme alvéolaire et d'une paroi acoustiquement résistive.

La zone perforée forme alors une paroi perforée et permet la réception d'au moins une partie d'un flux d'air reçu depuis une veine d'air.

On comprendra par l'expression « paroi résistive » ou « paroi acoustiquement résistive » une paroi de la structure d'atténuation acoustique permettant le maintien au moins en partie d'un flux d'air reçu par la structure d'atténuation acoustique depuis la veine d'air.

La fonction acoustique de la structure d'atténuation acoustique peut être réalisée lorsque la structure d'atténuation acoustique formée par l'âme alvéolaire et la paroi acoustiquement résistive est rapportée sur la zone percée.

Avantageusement, ladite au moins une structure acoustique est rapportée sur une face extérieure du carénage interne, c'est-à-dire la face du carénage interne, extérieure par rapport à un axe principal de la nacelle. En d'autre terme, il s'agit de la face du carénage interne située en regard du carénage externe.

Dans un autre mode de réalisation, l'entrée d'air comprend une marche formée dans une zone s'étendant depuis une portion de la lèvre d'entrée d'air et le carénage interne, la marche étant configurée pour accueillir ladite au moins une structure d'atténuation acoustique. Ceci permet de fournir une entrée d'air présentant un dessin aérodynamique optimal et de faciliter l'écoulement du flux d'air.

La marche délimite une portion amont de ladite zone et une portion aval de cette dite zone. La portion aval peut être décalée radialement par rapport à la portion amont. Plus particulièrement, la portion aval est enfoncée vers l'extérieur par rapport à la portion amont relativement à l'axe principal. La marche comprend alors la portion amont et la portion aval.

La marche peut comprendre une portion inclinée ou strictement radiale formée dans ladite zone.

Selon une première variante de ce dernier mode de réalisation, la marche est formée dans une zone délimitant la lèvre d'entrée d'air et le carénage interne.

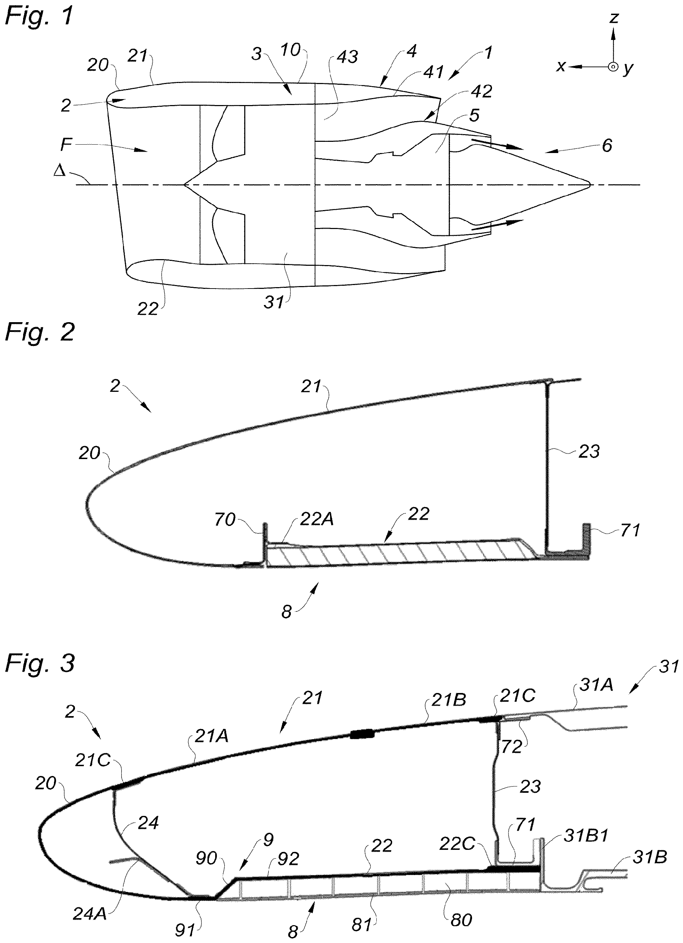

Dans une telle entrée d'air, afin de permettre la distinction entre la lèvre d'entrée d'air et le carénage interne il conviendrait de comparer l'invention à l'art antérieur décrit en figure 2.

Selon une deuxième variante de ce dernier mode de réalisation, la marche est formée dans la lèvre d'entrée d'air et ladite au moins une structure d'atténuation acoustique s'étend dans la lèvre d'entrée d'air.

En d'autre termes, la structure d'atténuation acoustique chevauche à la fois la lèvre d'entrée d'air et le carénage interne.

Dans ce dernier mode de réalisation, ladite au moins une structure d'atténuation acoustique est formée d'une âme alvéolaire et d'une paroi perforée, la paroi perforée affleurant la lèvre d'entrée d'air.

Egalement dans ce dernier mode de réalisation, ladite au moins une structure d'atténuation acoustique est rapportée sur une face intérieure du carénage interne, c'est-à-dire la face opposée à la face extérieure du carénage interne.

Selon une variante de réalisation, l'entrée d'air comprend une cloison avantdélimitant la lèvre d'entrée d'air. La cloison avant peut présenter une forme curviligne, inclinée ou droite. Le cloisonnement de la lèvre d'entrée d'air permet par exemple d'y intégrer un sytème de dégivrage.

Selon une variante de réalisation, l'entrée d'air comprend un élément de renfort prenant appui sur la cloison avant.

Selon une variante de réalisation, la cloison avant prend appui sur la marche.

Avantageusement, un tel appui permet d'améliorer l'immobilisation de la marche.

Selon une variante de réalisation, le carénage interne et/ou le carénage externe de l'entrée d'air comprend au moins un raidisseur.

Selon une variante de réalisation, le carénage interne et/ou le carénage externe de l'entrée d'air comprend au moins une surépaisseur.

La surépaisseur permet d'une part de rigidifier la structure de l'entrée d'air et d'autre part de fixer les raidisseurs lorsque ceux-ci sont rapportés par rivetage.

Les surépaisseurs peuvent être utilisées pour fixer les raidisseurs lorsque ceux-ci sont rapportés par soudage.

On comprendra par le terme surépaisseur qu'une section du carénage interne ou du carénage externe est plus épaisse qu'une autre section adjacente de ce carénage. Avantageusement les raidisseurs sont rapportés au carénage interne et/ou au carénage externe.

Selon une variante de réalisation, la cloison ou support arrière est supportée par le carénage interne.

Dans une variante de réalisation, la cloison ou support arrière est supportée par une surépaisseur du carénage interne.

Selon un deuxième aspect, l'invention se rapporte à une nacelle comprenant une entrée d'air telle que décrit précédemment.

Selon un autre aspect, l'invention se rapporte à un procédé de fabrication d'une structure annulaire et d'une lèvre d'entrée d'air telle que décrit précédement, dans lequel une structure annulaire comportant un carénage interne et au moins une partie d'un carénage externe est réalisée en une seule pièce est réalisée de continuité de matière avec la lèvre d'entrée d'air.

Selon une variante de réalisation, ladite structure annulaire et ladite lèvre d'entrée d'air sont réalisées au moyen d'un moule en une pièce. On comprendra que l'ensemble formé par la structure annulaire et la lèvre d'entrée d'air est formé par un moule à l'aide duquel cet ensemble est retiré du moule sans désassemblage de ce dernier.

Selon une variante de réalisation, ladite structure annulaire et ladite lèvre d'entrée d'air sont réalisées au moyen d'un moule comprenant une première partie et une deuxième partie, optionnellement si les lignes présentent une contre dépouille seulement..

De façon avantageuse, le moule peut comprendre trois ou quatre parties. Par exemple, lorsque le moule comprend trois parties, la première partie peut former le carénage externe, la deuxième partie peut former la lèvre d'entrée d'air et une troisième partie peut former le carénage interne.

Dans un premier mode de réalisation, une première partie du moule est destinée à former au moins une partie de la lèvre d'entrée d'air et ladite au moins une partie du carénage externe de la structure annulaire et une deuxième partie du moule est destinée à former la partie complémentaire de la lèvre d'entrée d'air et le carénage interne de la structure annulaire.

Dans un deuxième mode de réalisation, une première partie du moule est destinée à former la lèvre d'entrée d'air et ladite au moins une partie du carénage externe de la structure annulaire et une deuxième partie du moule est destinée à former le carénage interne de la structure annulaire.

Dans un troisième mode de réalisation, une première partie du moule est destinée à former au moins une partie de la lèvre d'entrée d'air et le carénage interne de la structure annulaire et une deuxième partie du moule est destinée à former la partie complémentaire de la lèvre d'entrée d'air et ladite au moins une partie du carénage externe de la structure annulaire.

Dans un quatrième mode de réalisation , une première partie du moule est destinée à former la lèvre d'entrée d'air et le carénage interne de la structure annulaire et une deuxième partie du moule est destinée à former ladite au moins une partie du carénage externe de la structure annulaire.

Selon une variante de réalisation, le procédé comprend une étape de perforation d'une zone du carénage interne recevant une structure d'atténuation acoustique.

Selon le premier et deuxième mode de réalisation, la deuxième partie est configurée pour former une marche dans une zone s'étendant depuis une portion de la lèvre d'entrée d'air et une portion du carénage interne.

Selon le troisième et quatrième mode de réalisation, la première partie est configurée pour former une marche dans une zone s'étendant depuis une portion de la lèvre d'entrée et une portion du carénage interne.

Dans un mode de réalisation, le procédé comprend une étape dans laquelle une structure d'atténuation acoustique est rapportée au carénage interne de l'entrée d'air. Dans un mode de réalisation, la structure annulaire et la lèvre d'entrée d'air sont réalisées en matériau métallique.

Dans une variante, la structure annulaire et la lèvre d'entrée d'air sont réalisées en matériau composite.

D'autres caractéristiques et avantages de l'invention apparaîtront à la lecture de la description nullement limitative qui suit et des figures annexées qui illustrent de manière schématique plusieurs modes de réalisation de l'entrée d'air selon l'invention.
[Fig. 1] est une représentation schématique d'une nacelle.
[Fig. 2]est une représentation schématique en coupe longitudinale d'une entrée d'air de l'art antérieur.
[Fig. 3] est une représentation schématique en coupe longitudinale d'une entrée d'air selon un premier mode de réalisation de l'invention.
[Fig. 4] est une représentation schématique en coupe longitudinale d'une entrée d'air selon un deuxième mode de réalisation de l'invention.
[Fig. 5] est une représentation schématique en coupe longitudinale d'une entrée d'air selon une variante de réalisation de l'invention.
[Fig. 6] est une représentation schématique en coupe longitudinale d'une entrée d'air selon un troisième mode de réalisation de l'invention.
[Fig. 7] est une représentation schématique en coupe longitudinale l'entrée d'air de la figure 6.
[Fig. 8] est une représentation schématique en coupe longitudinale d'une entrée d'air selon un quatrième mode de réalisation de l'invention.
[Fig. 9] est une représentation schématique en coupe longitudinale d'une entrée d'air selon modede réalisation particulier de l'invention.
[Fig. 10] est une représentation schématique de la fabrication d'une entrée d'air selon l'invention à l'aide d'un moule représenté à l'état assemblé.
[Fig. 11] est une représentation schématique où le moule de la figure 10 est désassemblé.
[Fig. 12] est une représentation schématique où l'entrée d'air est retirée du moule. Sur l'ensemble de ces figures, des références identiques ou analogues désignent des organes ou ensembles d'organes identiques ou analogues.

L'expression « amont » et « avant » seront utilisées indifféremment l'une de l'autre pour désigner l'amont de l'entrée d'air et l'expression « aval » et « arrière » seront utilisées indifféremment l'une de l'autre pour désigner l'aval de l'entrée d'air.

Les expressions « amont » et « aval » se réfèrent au sens de l'écoulement d'air entrant et sortant d'une nacelle.

On entend par l'expression « relié » deux éléments mécaniques assemblés l'un à l'autre par tous moyens de fixation adaptés, tels que des vis, rivets, un soudage ou un collage. La nacelle 1 comprend une section amont formant une entrée d'air 2, une section médiane 3 entourant une soufflante 31 d'un moteur 5 tel qu'un turboréacteur double flux et une section aval 4 abritant un système d'inversion de poussée (non visible), la nacelle servant à canaliser les flux d'air générés par le moteur 5 et s'étend selon un axe principal Δ.

L'entrée d'air 2 comprend d'une part, une lèvre d'entrée d'air 20 formant un bord d'attaque adapté pour permettre la captation optimale vers le turboréacteur de l'air nécessaire à l'alimentation de la soufflante 31 et des compresseurs internes du turboréacteur, et d'autre part, une structure annulaire 21, 22 sur laquelle est rapportée la lèvre d'entrée d'air 20, destinée à canaliser convenablement l'air vers les aubes de la soufflante 31. La lèvre d'entrée d'air 20 et la structure annulaire 21, 22 sont rattachées en amont d'un carter de soufflante appartenant à la section médiane 3 de la nacelle 1. La section aval 4 comprend quant à elle une structure interne 42 (encore appelée « inner fixed structure » ou « IFS ») entourant la partie amont du turboréacteur 5, une structure externe 41 (encore appelée « outer fan structure » ou « OFS ») formant le canal flux froid et fixes par rapport au moteur, et un capot mobile comportant des moyens d'inversion de poussée.

La structure interne 42 et la structure externe 41 délimite une veine 43 permettant le passage d'un flux d'air F pénétrant la nacelle 1 au niveau de la lèvre d'entrée d'air 20.

La nacelle 1 comporte généralement un sommet 10 destiné à recevoir un mât réacteur d'attache permettant de fixer ladite nacelle 1 à une aile de l'aéronef. Pour ce faire, ledit sommet 10 comporte des moyens pour fixer ledit mât réacteur.

La nacelle de turboréacteur est en particulier suspendue au mât réacteur, par le biais d'une poutre au niveau de ce sommet 10. La nacelle 1 se termine par une tuyère d'éjection 6.

La figure 2 représente une entrée d'air 2 de nacelle de turboréacteur de l'art antérieur. L'entrée d'air 2 comprend une structure annulaire 21, 22 et une cloison annulaire transversale de renfort et de transmission d'efforts, dite « cloison arrière » 23. La structure annulaire 21, 22 comprend un carénage externe 21 assurant une continuité aérodynamique externe, un carénage interne 20 assurant une continuité aérodynamique interne.

Le carénage externe 21 et le carénage interne 22 sont reliés en amont par la lèvre d'entrée d'air 20. La lèvre d'entrée d'air 20 assure la jonction entre les deux carénages 21, 22.

Dans la présente entrée d'air 2, la lèvre d'entrée d'air 20 est intégrée au carénage externe 21. La lèvre d'entrée d'air 20 et le carénage externe 21 sont de continuité de matière. Cette pièce forme alors une lèvre d'entrée d'air allongée 20, 21.

La lèvre d'entrée d'air allongée 20, 21 et le carénage interne 22 sont fabriqués distinctement et sont assemblés l'un à l'autre au moyen d'une série de brides de fixation 70 avant, ici représenté par une bride de fixation avant 70.

Le carénage interne 22 s'étend jusqu'à la cloison arrière 23 à laquelle il est relié.

Une extrémité de la cloison arrière 23 est reliée au carénage externe 21, l'autre extrémité de la cloison arrière 23 est reliée au carénage interne 22 par le biais d'une bride de fixation 71 arrière reliée au carénage interne 22. La cloison arrière 23 est supportée par la bride de fixation arrière 71.

Le carénage interne 22 comprend un panneau acoustique 8.

L'assemblage de la lèvre d'entrée d'air allongée 20, 21 au carénage interne 22 présente, en outre des inconvénients connus de l'art antérieur, la nécessité de prévoir une déformation du carénage interne dans une zone 22A reliant le carénage interne 22 à la bride de fixation 70 avant. Une telle déformation a pour conséquence de limiter les performances acoustiques du panneau acoustique 8.

Par ailleurs, une telle entrée d'air formée par la lèvre d'entrée d'air allongée 20, 21 et le carénage interne 22 reliés par l'intermédiaire de brides de fixation ou d'éclisses a pour effet la transmission de vibrations mécaniques entre la lèvre d'entrée d'air allongée 20, 21 et le carénage interne 22 pouvant impacter les performances acoustiques du panneau acoustique 8.

La figure 3 représente une entrée d'air 2 de nacelle 1 selon un premier mode de réalisation de l'invention. L'entrée d'air 2 comprend une lèvre d'entrée d'air 20, une structure annulaire 21, 22 et une cloison arrière 23 qui délimite l'entrée d'air 2 et une section médiane 3 de la nacelle.

La structure annulaire 21, 22 comprend un carénage externe 21 assurant une continuité aérodynamique externe et un carénage interne 22 assurant une continuité aérodynamique interne.

Le carénage externe 21 et le carénage interne 22 sont reliés en amont par une lèvre d'entrée d'air 20. La lèvre d'entrée d'air 20 assure la jonction entre les deux carénages 21, 22.

Dans le présent exemple, le carénage externe 21 est formé d'une partie de carénage externe 21A et d'une jonction intermédiaire 21B. La partie de carénage externe 21A et la jonction intermédiaire 21B sont reliés par le biais d'une bride de jonction 37.

Dans une variante (non représenté) la partie de carénage externe 21A et la jonction intermédiaire 21B peuvent être directement reliées l'un à l'autre par moyens de fixation adapté, tels que des vis, rivets, un soudage ou un collage.

La lèvre d'entrée d'air 2, la partie de carénage externe 21A et le carénage interne 22, sont de continuité de matière et forme ainsi une pièce d'un seul tenant de continuité de matière.

Cette pièce forme alors une lèvre d'entrée d'air allongée 20, 21, 22 qui s'étend par son carénage interne 22 jusqu'à la cloison arrière 23.

La cloison arrière 23 est en appui au niveau de son extrémité supérieure sur une surépaisseur 21B1 intégrée à la jonction intermédiaire 21B. La jonction intermédiaire 21B est ainsi directement reliée à la cloison arrière 23 par tous moyens de fixation tels qu'introduit précédemment.

L'autre extrémité de la cloison arrière 23 est reliée au carénage interne 22 par le biais d'une bride de fixation arrière 71. La bride de fixation arrière 71 est reliée à une surépaisseur 22C du carénage interne 22. La bride de fixation arrière 71 arrière peut être par tous moyens de fixation tels qu'introduit précédemment.

Dans une variante (non représentée), le carénage interne 22 peut être directement relié à la cloison arrière 23 par tous moyens de fixation tels qu'introduit précédemment.

Ainsi, les efforts reçus par le carénage externe 21 sont au moins en partie transmis au carénage interne 22.

On comprendra par le terme surépaisseur qu'une section du carénage interne 22 ou du carénage externe 21 est plus épaisse qu'une autre section adjacente de ce carénage.

La jonction intermédiaire 21B est reliée à un capot de soufflante 31A de la section médiane 3 au moyen d'une bride de jonction de carter 72. La bride de jonction de carter 72 relie à la fois la jonction intermédiaire 21B, la cloison arrière 23 et le capot de soufflante 31A.

Le carénage interne 22 est relié à un carter de soufflante 31B au moyen de la bride de fixation arrière 71. La bride de fixation arrière 71 est directement reliée à une bride de fixation 31B1 du carter de soufflante 31B.

Dans le présent exemple, le carter de soufflante 31B et la bride de fixation du carter 31B1 sont de continuité s de matière c'est-à-dire qu'ils sont réalisés en une seule pièce. L'entrée d'air 2 comprend une cloison annulaire 24 avant « dite cloison avant » présentant une forme curviligne qui délimite la lèvre d'entrée d'air 20 des carénages interne 22 et externe 21. Le cloisonnement de la lèvre d'entrée d'air 2dans un espace en forme de D permet par exemple d'y intégrer un système de dégivrage.

Dans d'autres variantes non représentées, la cloison avant peut être inclinée ou droite. Une extrémité de la cloison 24 avant est reliée à une surépaisseur 21C du carénage externe 21, par exemple par soudage. Une autre extrémité de la cloison 24 avant est reliée au carénage interne 22. La cloison avant 24 peut avantageusement être complétée par un élément de renfort 24A avantageusement disposé sur sa portion curviligne, inclinée ou droite.

L'entrée d'air 2 comprend une marche 9 formée dans une zone située entre la lèvre d'entrée d'air 20 et le carénage interne 22. Dans le présent exemple, la marche 9 est formée dans une zone délimitant la lèvre d'entrée d'air 20 et le carénage interne 22.

La marche 9 est configurée pour accueillir au moins une structure d'atténuation acoustique 8 rapportée. Cette configuration permet ainsi de fournir une entrée d'air présentant un dessin aérodynamique optimal et de faciliter l'écoulement du flux d'air et favorise par ailleurs les performances acoustiques de la structure d'atténuation acoustique 8.

La marche 9 comprend une portion 90 formée dans ladite zone située entre la lèvre d'entrée d'air 20 et le carénage interne 22. La portion inclinée 90 délimite une portion amont 91 de ladite zone et une portion aval 92 de cette dite zone. La portion aval 92 est décalée par rapport à la portion amont 91. Plus particulièrement, la portion aval 92 est enfoncée par rapport à la portion amont 91. La marche 9 est alors formée de la portion amont 91, la portion inclinée 90 et la portion aval 92. La portion aval 92 est par exemple une portion du carénage interne 22 et la portion amont est par exemple une portion de la lèvre d'entrée d'air 20.

Dans le présent exemple, l'extremité de la cloison avant 24 reliée au carénage interne 22 prend appui sur la portion inclinée 90 de la marche 9. Un tel appui permet d'améliorer l'immobilisation de la marche 9.

L'entrée d'air 2 comprend au moins une structure d'atténuation acoustique 8 rapportée. Dans le présent exemple seule une structure d'atténuation acoustique est représentée. Dans le présent exemple, la structure d'atténuation acoustique 8 est formée d'une paroi acoustique percée 81 qui affleure la lèvre d'entrée d'air 20 et d'une âme alvéolaire 80.

Ainsi, le carénage interne 22 recevant la structure d'atténuation acoustique 8 forme la paroi résistive.

Par structure d'atténuation acoustique rapportée on entend une structure fabriquée séparément de l'entrée d'air 2 et qui est assemblée par la suite sur le carénage interne 22. La structure d'atténuation acoustique 8 peut être rapportée au carénage interne 22 par tous moyens de fixation tels que définis précédemment.

Le carénage interne 22 présente une face extérieure située en regard du carénage externe 21 et une face intérieure opposée à la face extérieure.

Dans le présent exemple, la structure d'atténuation acoustique 8 est rapportée sur la face intérieure du carénage interne 22.

Selon ce mode de réalisation, la bride de fixation 71 arrière s'appuie sur la structure d'atténuation acoustique 8 par l'intermédiaire de la surépaisseur 22C du carénage interne 22.

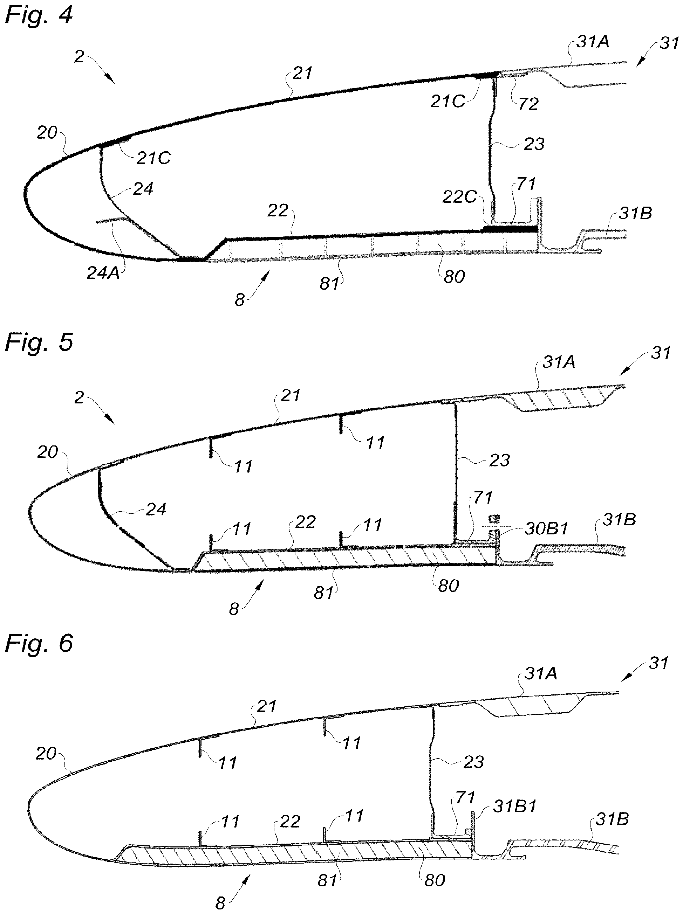

La figure 4 est une représentation de l'entrée d'air 2 de la figure 3 dans laquelle la partie de carénage externe 21A et la jonction intermédiaire 21B formant le carénage externe 21 sont de continuité de matière formant ainsi le carénage externe 21A.

On comprendra alors que l'entrée d'air 2 présente une lèvre d'entrée d'air 20 formée par la continuité de matière de la lèvre d'entrée d'air 20 d'une part avec le carénage interne 22 et d'autre part avec le carénage externe 21, étendue chacun jusqu'à la cloison arrière 23 à laquelle ils sont reliés.

Dans ce mode de réalisation, le carénage externe 21 est directement relié à la cloison arrière 23 par tous moyens de fixation introduit précédemment.

La figure 5 est une illustration d'une variante de réalisation de l'entrée d'air 2 illustrée en figure 4 dans laquelle la bride de fixation 31B1 du carter de soufflante 31B venue de matière avec le carter de soufflante 31B est reliée à la bride de fixation arrière 71 au moyen de boulon. Dans le présent exemple, une extrémité de la bride de fixation arrière 71 s'étend au-dela de son extrémité opposée reliée à la bride de fixation 31B1.

Dans le présent exemple, l'entrée d'air 2 comprend des raidisseurs 11 rapportés aux carénages interne 22 et/ou externe 21 de la structure annulaire 21, 22. Dans le présent exemple, deux raidisseurs 11 sont rapportés au carénage externe 21 et deux raidisseurs 11 sont rapportés au carénage interne 22. Les raidisseurs 11 du carénage interne 22 sont disposés en regard des raidisseurs 11 du carénage externe 21.

Les raidisseurs 11 des carénages interne et externe 21, 22 peuvent être rapportés par soudage, brasage, rivetage et/ou collage. Dans une variante (non représentée), les raidisseurs 11 peuvent être rapportés par rivetage. Lorsque les raidisseurs 11 sont rapportés aux carénages au moyen de rivets, ceux-ci sont assemblés aux carénages 21, 22 correspondant par l'intermédiaire de surépaisseurs 21C, 22C.

La figure 6 représente une entrée d'air 2 selon un mode de réalisation de l'invention.

L'entrée d'air 2 comprend la structure annulaire 21, 22 comprenant le carénage externe 21 et le carénage interne 22 formée de continuité de matière avec la lèvre d'entrée d'air 20. L'entrée d'air 2 comprend également une cloison arrière 23.

Dans ce mode de réalisation, l'entrée d'air 2 est dépourvue de cloison avant.

La marche 9 est formée dans la lèvre d'entrée d'air 20. La structure d'atténuation acoustique 8 rapportée au carénage interne 22 s'étend alors dans la lèvre d'entrée d'air 2.

En d'autre termes, la structure d'atténuation acoustique 8 chevauche à la fois la lèvre d'entrée d'air 20 et le carénage interne 22.

La structure d'atténuation acoustique 8 est rapportée sur la face intérieure du carénage interne 22 et s'étend le long de ce carénage depuis la lèvre d'entrée d'air 20 jusqu'à la bride de fixation du carter 31B1. Ceci permet d'augmenter la surface de traitement acoustique.

Le carénage interne 22 est relié au carter de soufflante 31B au moyen de la bride de fixation arrirère 71. La bride de fixation arrière 71 est reliée à la bride de fixation 31B1 du carter de soufflante 31B.

Le carénage interne 22 et/ou le carénage externe 21 comprend également chacun deux raidisseurs 11 rapportés. Les raidisseurs 9 du carénage interne 22 sont agencés en regard des raidisseurs du carénage externe 21.

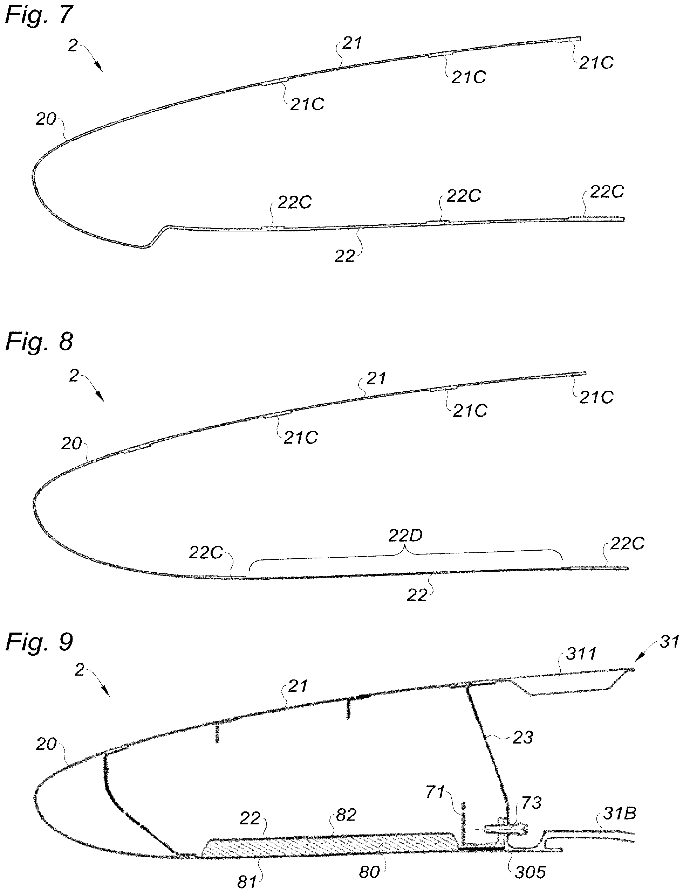

La figure 7 représente la structure annulaire 21, 22 de l'entrée d'air 2 comprenant le carénage externe 21 et le carénage interne 22 formée de continuité de matière avec la lèvre d'entrée d'air 20 selon une variante de réalisation. Dans cette variante de réalisation, la structure d'atténuation acoustique 8 a été déposée, c'est-à-dire qu'elle à été retirée du carénage interne 22.

L'entrée d'air 2 comprend des surépaisseurs 21C, 22C intégrées aux carénages interne 22 et/ou externe 21.

Les surépaisseurs 21C, 22C permettent d'une part de rigidifier la structure de l'entrée d'air et d'autre part de fixer les raidisseurs 11 lorsque ceux-ci sont rapportés par rivetage.

Le carénage externe 21 présente trois surepaisseurs 21C. La surépaisseur 21C située à l'extremité la plus avale du carénage externe 21 est particulièrement utile pour la fixation de la cloison arrière 23 (non représentée) par exemple au moyen de vis.

Le carénage interne 22 présente trois surepaisseurs 22C. La surépaisseur située à l'extremité la plus avale du carénage interne 22 est particulièrement utile pour supporter la bride de fixation arrière 71. La bride de fixation arrière 71 et le carénage interne 22 peuvent être reliés par exemple par des rivets. La bride de fixation arrière 71 est particulièrement utile pour supporter la cloison arrière 23 (non représentée) et/ ou relier le carénage interne 22 au carter de soufflante (non représenté).

La figure 8 représente une entrée d'air 2 selon un autre mode de réalisation de l'invention.

Dans ce mode de réalisation, le carénage interne 22 ne présente pas de marche. Dans ce mode de réalisation, le carénage interne 22 est perforé sur une zone 22D c'est-à-dire qu'il présente une pluralité de trous (non visibles) disposés de manière régulière sur la zone prévue pour recevoir au moins une structure d'atténuation acoustique 8 rapportée au carénage interne 22.

La zone perforée 22D forme alors une paroi perforée et permet la réception d'au moins une partie d'un flux d'air reçu depuis une veine d'air.

Dans ce mode de réalisation, la laminarité est améliorée du fait de l'absence d'élément de jonction au niveau de l'entrée d'air qui perturbent habituellement l'écoulement aérodynamique de l'air.

Dans ce mode de réalisation, la structure d'atténuation acoustique (non représentée) est formée d'une âme alvéolaire et d'une paroi acoustiquement résistive.

Dans ce mode de réalisation, la structure d'atténuation acoustique est configurée pour être disposée sur la face extérieure du carénage interne 22 (par exemple illustré à la figure 9) c'est-à-dire la face du carénage interne, extérieure par rapport à un axe principal de la nacelle.

L'entrée d'air 2 comprend également des surépaisseurs 21C, 22C intégrées aux carénages interne 22 et/ou externe 21.

Le carénage externe 21 présente quatre surepaisseurs 21C. La surépaisseur située à l'extremité la plus avale du carénage externe 21 est particulièrement utile pour la fixation d'une cloison arrière 24 par exemple au moyen de boulons.

Le carénage interne 22 présente deux surepaisseurs 22C. La surépaisseur située à l'extremité la plus avale du carénage interne 22 est particulièrement utile pour supporter une bride de fixation arrière 71.

La figure 9 représente une nacelle comprenant une entrée d'air 2 selon une variante de réalisation de l'invention. L'entrée d'air 2 comprend une lèvre 20 d'entrée d'air qui assure la jonction entre le carénage externe 21 et le carénage interne 22 et qui est intégrée à ces carénages interne 22 et externe 21 formant ainsi une entrée d'air 2 formée de continuité de matière.

L'entrée d'air 2 comprend également au niveau de son carénage interne 22 une bride de fixation arrière 71 configurée pour coopérer avec une bride de fixation 31B1 du carter qui est venue de matière avec le carter de soufflante 31B à son extrémité amont. Cet assemblage des brides 71 et 31B1 assure la fixation de l'entrée d'air 2 avec la section médiane 3. Cet assemblage est complété et sécurisé par des moyens de fixation 73 de type vis-écrou.

Le carénage externe 21 présente une extrémité aval configurée pour être positionnée dans une zone de jonction affleurant avec une extrémité avant du capot de soufflante 31 de sorte à assurer la continuité aérodynamique externe de la nacelle 1.

Pour maintenir une certaine rigidité à la structure, ce carénage externe 21 vient en appui contre une cloison arrière 23.. De préférence, cet appui est complété par des moyens de fixation pour fixer la cloison arrière 23 au-dit carénage externe 21 de l'entrée d'air 2. Ces moyens de fixation peuvent être par exemple des ensemble vis-écrou.

Dans le présent exemple, la cloison arrière 23 s'étend radialement dans l'épaisseur de la nacelle et est configurée pour être solidaire du carter de soufflante 31B, et plus particulièrement solidaire de la bride de fixation 31B1 du carter. Plus particulièrement, la cloison arrière 23 est en appui sur une face arrière de la bride de fixation 31B1 du carter, c'est-à-dire oposée à une face avant configurée pour coopérer et/ou être accolée avec une face arrière de la bride de fixation arrière 71. Cela participe à l'amélioration du chemin d'efforts.

En d'autres termes, la cloison arrière 23 s'étend d'une extrémité inférieure configurée pour être solidaire de la section médiane 3, et plus particulièrement du carter de soufflante 31B, au niveau de la bride de fixation 31B1 du carter, jusqu'à une extrémité supérieure en contact au moins avec une partie aval de du carénage externe 21 de l'entrée d'air 2.

Dans le présent exemple, la structure d'atténuation acoustique 8 rapportée est formée d'une âme alvéolaire 80 et d'une paroi acoustiquement résistive 82.

La structure d'atténuation acoustique 8 est rapportée sur la surface extérieure du carénage interne 22, c'est-à-dire la surface opposée à la surface intérieure du carénage interne 22.

Le carénage interne 22 est perforé sur la zone 22D recevant la structure d'atténuation acoustique 7.

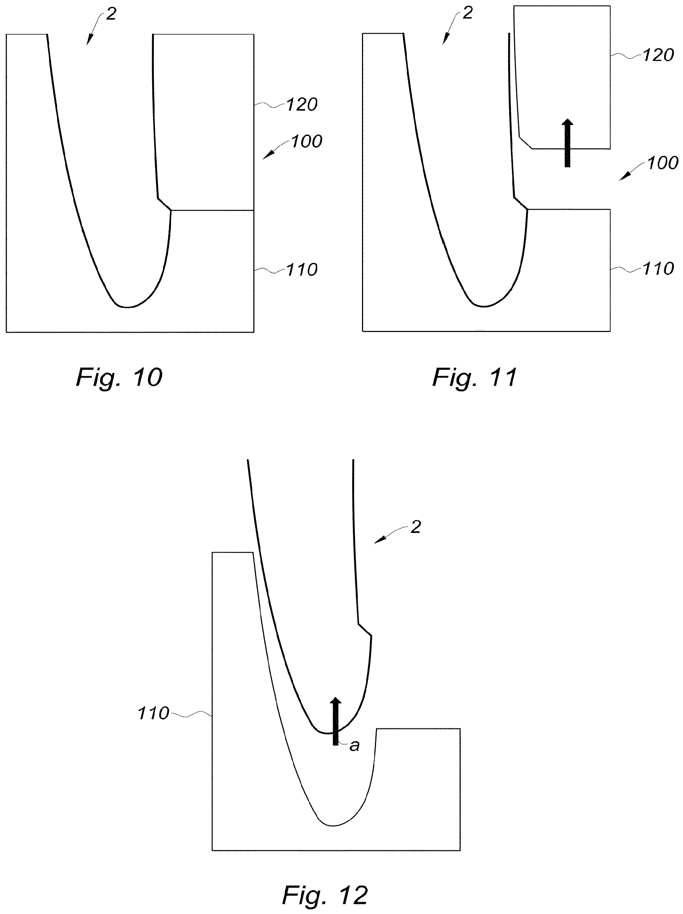

La figure 10 représente un moule 100 de fabrication d'une structure annulaire 20, 21 et d'une lèvre d'entrée d'air 20 de continuité de matière selon un mode de réalisation de l'invention.

Le moule de fabrication 100 est configuré pour réaliser la lèvre d'entrée d'air 20, la structure annulaire 21, 22 comportant le carénage interne 22 et ladite au moins une partie du carénage externe 21 de continuité de matière avec la lèvre d'entrée d'air 20. Le moule de fabrication 100 comprend une première partie 110 et une deuxième partie 120.

Dans ce mode de réalisation, la première partie 110 du moule est configurée pour former la lèvre d'entrée d'air 20 et le carénage externe 21 de la structure annulaire 21, 22. La deuxième partie 120 du moule est configurée pour former le carénage interne 22 de la structure annulaire 21, 22.

En particulier, la deuxième partie 120 du moule 100 est configurée pour former la marche 9 dans le carénage interne 22 de la structure annulaire 21, 22.

La structure annulaire 21, 22 comprenant le carénage externe 21 et le carénage interne 22 de continuité de matière avec la lèvre d'entrée d'air 2, peuvent être réaliséés en matériau métallique ou en matériau composite.

En fonctionnement, le procédé de fabrication de la structure annulaire 21, 22 et de la lèvre d'entrée d'air 20 de continuité de matière comprend une étape de préparation du matériau qui sera utilisé pour fabriquer ladite pièce.

Le matériau peut être un matériau métallique ou un matériau composite tel que des plis composite formés de fibres de carbone.

Le procédé peut comprendre une étape d'ajustement de l'épaisseur du matériau utilisé.

Dans le cas de matériau métallique, l'ajustement d'épaisseur peut être réalisée par usinage chimique. Dans le cas de matériau composite, l'ajustement d'épaisseur, en particulier une augmentation d'épaisseur peut être réalisé par ajout de pli composite. Le procédé comprend une étape d'insertion du matériau dans le moule 100 formé de la première 110 et deuxième partie 120.

Le matériau est moulé dans le moule 100 de sorte à obtenir la pièce formée de la structure annulaire 3 et de la lèvre d'entrée d'air 20 en une pièce dans la forme souhaitée.

Dans le cas d'une entrée d'air réalisée en matériau métallique, le procédé peut comprendre une étape de repoussage réalisé par tour (aussi appelé spin forming) consistant en une étape de déformation plastique d'une tôle métallique de forme circulaire. Le matériau métallique de l'entrée d'air est bien entendu conforme à la réalisation d'une telle étape.

Alternativement, le procédé peut comprendre une étape de formage par explosion dans laquelle la déformation de la tôle métallique est obtenue par une pression d'une onde de choc produite par un explosif.

A la fin du moulage, la deuxième partie 120 du moule 100 est retirée (figure 11) suivant le sens de la flèche « a » puis la pièce formée de la structure annulaire 3 et de la lèvre d'entrée d'air 20 nouvellement formée est retirée de la première partie 110 du moule 100 (figure 12) suivant le sens de la flèche « a ».

Le procédé de fabrication peut comprendre une étape de mise à longueur des carénages interne 22 et externe 21 de la pièce nouvellement formée dans le cas où l'un de ces carénages présenterai des surlongueurs après moulage.

Le procédé de fabrication peut comprendre une étape d'ajustement d'épaisseurs des carénages interne 22 et externe 21 après moulage. Cette étape peut être avantegeusement prévue pour former les surépaisseurs 21C, 22C.

Le procédé de fabrication peut comprendre une étape de finission dans laquelle la surface des carénages interne 22 et externe 21 est traitée et/ou peinte.

Le procédé peut également comprendre une étape d'ajout de raidisseurs 11 au niveau du carénage interne 22 et/ou du carénage externe 21. L'assemblage des raidisseurs 11 à ces carénages peut être réalisée par rivetage ou par soudage.

Le procédé de fabrication peut comprendre une étape de contrôle qualité de la pièce obtenue.

Dans une variante, lorsque la pièce formée par la structure annulaire 21, 22 et la lèvre d'entrée d'air 20 est dépourvue de marche, le procédé peut comprendre une étape de perforation d'une zone 22D du carénage interne recevant une structure d'atténuation acoustique.

Ainsi, grâce à l'entrée d'air selon l'invention dans laquelle la structure annulaire comprenant le carénage interne 22, le carénage externe 21 et la lèvre d'entrée d'air 20 de continuité de matière, l'écoulement laminaire de l'air au niveau de la jonction entre la lèvre d'entrée d'air allongée et le carénage interne 22 est augmenté.

Par ailleurs, la fabrication de l'entrée d'air est simplifiée, moins onéreuse et la masse globale de l'entrée d'air est réduite.

## Revendications

1. Entrée d'air (2) de nacelle de turboréacteur comprenant une structure annulaire (21, 22) et une cloison arrière (23), la structure annulaire (21, 22) comportant au moins une partie (21A) d'un carénage externe (21) et un carénage interne (22) joints l'un à l'autre par une lèvre d'entrée d'air (20), le carénage interne (22) étant relié à la cloison arrière (23), l'entrée d'air **caractérisée en ce que** la structure annulaire (21, 22) comportant ladite au moins une partie (21A) du carénage externe (21), la lèvre d'entrée d'air (20) et le carénage interne (22) est de continuité de matière et **en ce que** l'entrée d'air (2) comprend en outre au moins une structure d'atténuation acoustique (8) rapportée au carénage interne (22) de la structure annulaire (21, 22).

2. Entrée d'air selon la revendication 1 où l'entrée d'air (2) comprend une jonction intermédiaire (21B) reliée à ladite au moins une partie (21A) du carénage externe (21) pour former le carénage externe (21), la jonction intermédiaire (21B) étant reliée à la cloison arrière (23).

3. Entrée d'air selon la revendication 2 où ladite au moins une partie (21A) du carénage externe et la jonction intermédiaire (21B) sont de continuité de matière.

4. Entrée d'air selon l'une des revendications précédentes où le carénage interne (22) est perforé sur une zone (22D) recevant ladite au moins une structure d'atténuation acoustique (8) et en ce que ladite au moins une structure d'atténuation acoustique (8) rapportée est formée d'une âme alvéolaire (80) et d'une paroi acoustiquement résistive (82).

5. Entrée d'air selon l'une des revendications 1 à 3 où elle comprend une marche (9) formée dans une zone s'étendant depuis une portion de la lèvre d'entrée d'air (20) et une portion du carénage interne (22), la marche (9) étant configurée pour accueillir ladite au moins une structure d'atténuation acoustique (8).

6. Entrée d'air selon la revendication 5 où ladite au moins une structure d'atténuation acoustique (8) est formée d'une paroi perforée (81) affleurant la lèvre d'entrée d'air (20) et d'une âme alvéolaire (80).

7. Entrée d'air selon la revendication 5 ou 6 où la marche (9) est formée dans une zone délimitant la lèvre d'entrée d'air (20) et le carénage interne (22).

8. Entrée d'air selon l'une des revendications 5 ou 6 où la marche (9) est formée dans la lèvre d'entrée d'air (20) et ladite au moins une structure d'atténuation acoustique (8) s'étend dans la lèvre d'entrée d'air (20).

9. Entrée d'air selon l'une des revendications 1 à 8 où elle comprend une cloison (24) avant délimitant au moins partiellement la lèvre d'entrée d'air (20).

10. Entrée d'air selon la revendication précédente prise en combinaison avec la revendication 5 où la cloison (24) avant prend appui sur la marche (9).

11. Procédé de fabrication d'une structure annulaire (21, 22) et d'une lèvre d'entrée d'air (20) selon l'une quelconque des revendications précédentes, dans lequel une structure annulaire (21, 22) comportant un carénage interne (22) et au moins une partie (21A) d'un carénage externe (21) est réalisée de continuité de matière avec la lèvre d'entrée d'air (20).

12. Procédé de fabrication selon la revendication 11 où ladite structure annulaire (21, 22) et ladite lèvre d'entrée d'air sont réalisées au moyen d'un moule (100) en une pièce.

13. Procédé de fabrication selon la revendication 11 où ladite structure annulaire (21, 22) et ladite lèvre d'entrée d'air sont réalisées au moyen d'un moule (100) comprenant une première partie (110) et une deuxième partie (120).

14. Procédé de fabrication selon la revendication précédente où la première partie (110) du moule (100) est destinée à former la lèvre d'entrée d'air (20) et ladite au moins une partie du carénage externe (21A) de la structure annulaire (21, 22) et la deuxième partie (120) du moule (100) est destinée à former le carénage interne (22) de la structure annulaire (21, 22).

15. Procédé de fabrication selon la revendication précédente où la deuxième partie (120) est configurée pour former une marche (9) selon l'objet de la de revendication 10 dans une zone s'étendant entre la lèvre d'entrée d'air (2) et le carénage interne (22).

16. Procédé de fabrication selon l'une quelconques des revendications 11 à 15 où le procédé comprend une étape de perforation d'une zone du carénage interne destinée à recevoir une structure d'atténuation acoustique (8).

17. Procédé de fabrication selon l'une quelconque des revendications 11 à 16 où le procédé comprend une étape dans laquelle une structure d'atténuation acoustique (8) est rapportée au carénage interne (22) de l'entrée d'air (1).

## Patentansprüche

1. Lufteinlass (2) einer Gondel eines Turbostrahltriebwerks, umfassend eine ringförmige Struktur (21, 22) und eine hintere Trennwand (23), wobei die ringförmige Struktur (21, 22) mindestens einen Teil (21A) einer Außenverkleidung (21) und einer Innenverkleidung (22) aufweist, die durch eine Lufteinlasslippe (20) miteinander verbunden sind, wobei die Außenverkleidung (22) mit der hinteren Trennwand (23) verbunden ist,
**dadurch gekennzeichnet, dass** die ringförmige Struktur (21, 22) die mindestens einen Teil (21A) der Innenverkleidung (21), die Lufteinlasslippe (20) und die Außenverkleidung (22) aufweist, materiell einstückig ist, und dass der Lufteinlass (2) ferner mindestens eine akustische Dämpfungsstruktur (8) umfasst, die an der Innenverkleidung (22) der ringförmigen Struktur (21, 22) befestigt ist.

2. Lufteinlass nach Anspruch 1, wobei der Lufteinlass (2) eine Zwischenverbindung (21B) umfasst, die mit dem zumindest einen Teil (21A) der Außenverkleidung (21) verbunden ist, um die Außenverkleidung (21) zu bilden, wobei die Zwischenverbindung (21B) mit der hinteren Trennwand (23) verbunden ist.

3. Lufteinlass nach Anspruch 2, wobei der mindestens eine Teil (21A) der Außenverkleidung und die Zwischenverbindung (21B) materiell einstückig sind.

4. Lufteinlass nach einem der vorhergehenden Ansprüche, wobei die Innenverkleidung (22) in einer Zone (22D) perforiert ist, die die mindestens eine akustische Dämpfungsstruktur (8) aufnimmt, und wobei die mindestens eine befestigte akustische Dämpfungsstruktur (8) aus einem zellenartigen Kern (80) und einer schallwiderstandsfähigen Wand (82) gebildet ist.

5. Lufteinlass nach einem der Ansprüche 1 bis 3, wobei er ferner eine Stufe (9) umfasst, die in einer Zone gebildet ist, die sich von einem Abschnitt der Lufteinlasslippe (20) und einem Abschnitt der Innenverkleidung (22) erstreckt, wobei die Stufe (9) dazu konfiguriert ist, die mindestens eine akustische Dämpfungsstruktur (8) aufzunehmen.

6. Lufteinlass nach Anspruch 5, wobei die mindestens eine akustische Dämpfungsstruktur (8) aus einer perforierten Wand (81), die bündig mit der Lufteinlasslippe (20) abschließt, und einem zellenartigen Kern (80) gebildet ist.

7. Lufteinlass nach Anspruch 5 oder 6, wobei die Stufe (9) in einer Zone gebildet ist, die die Lufteinlasslippe (20) und die Innenverkleidung (22) begrenzt.

8. Lufteinlass nach einem der Ansprüche 5 oder 6, wobei die Stufe (9) in der Lufteinlasslippe (20) ausgebildet ist und sich die mindestens eine akustische Dämpfungsstruktur (8) in die Lufteinlasslippe (20) hinein erstreckt.

9. Lufteinlass nach einem der Ansprüche 1 bis 8, wobei er eine vordere Trennwand (24) umfasst, die die Lufteinlasslippe (20) mindestens teilweise begrenzt.

10. Lufteinlass nach dem vorhergehenden Anspruch, in Kombination mit Anspruch 5, wobei die vordere Trennwand (24) auf der Stufe (9) aufliegt.

11. Herstellungsverfahren für eine ringförmige Struktur (21, 22) und eine Lufteinlasslippe (20) nach einem der vorhergehenden Ansprüche, wobei eine ringförmige Struktur (21, 22) eine Innenverkleidung (22) und mindestens einen Teil (21A) einer Außenverkleidung (21) materiell einstückig mit der Lufteinlasslippe (20) hergestellt wird.

12. Herstellungsverfahren nach Anspruch 11, wobei die ringförmige Struktur (21, 22) und die Lufteinlasslippe mittels einer Form (100) in einem Stück hergestellt werden.

13. Herstellungsverfahren nach Anspruch 11, wobei die ringförmige Struktur (21, 22) und die Lufteinlasslippe mittels einer Form (100), die einen ersten Teil (110) und einen zweiten Teil (120) umfasst, hergestellt werden.

14. Herstellungsverfahren nach dem vorhergehenden Anspruch, wobei der erste Teil (110) der Form (100) dazu bestimmt ist, die Lufteinlasslippe (20) und den mindestens einen Teil der Außenverkleidung (21A) der ringförmigen Struktur (21, 22) zu bilden, und der zweite Teil (120) der Form (100) dazu bestimmt ist, die Innenverkleidung (22) der ringförmigen Struktur (21, 22) zu bilden.

15. Herstellungsverfahren nach dem vorhergehenden Anspruch, wobei der zweite Teil (120) dazu konfiguriert ist, eine Stufe (9) gemäß dem Gegenstand von Anspruch 10 in einer Zone zu bilden, die sich zwischen der Lufteinlasslippe (2) und der Innenverkleidung (22) erstreckt.

16. Herstellungsverfahren nach einem der Ansprüche 11 bis 15, wobei das Verfahren einen Schritt des Perforierens einer Zone der Innenverkleidung umfasst, die dazu bestimmt ist, eine akustische Dämpfungsstruktur (8) aufzunehmen.

17. Herstellungsverfahren nach einem der Ansprüche 11 bis 16, wobei das Verfahren einen Schritt umfasst, wobei eine akustische Dämpfungsstruktur (8) an der Innenverkleidung (22) des Lufteinlasses (1) befestigt wird.

## Claims

1. An air inlet (2) of a turbojet engine nacelle comprising an annular structure (21, 22) and a rear partition (23), the annular structure (21, 22) including at least one portion (21A) of an outer fairing (21) and an inner fairing (22) joined together by an air inlet lip (20), the inner fairing (22) being connected to the rear partition (23), the air inlet being **characterized in that** the annular structure (21, 22) including said at least one portion (21A) of the outer fairing (21), the air inlet lip (20) and the inner fairing (22) is of continuity of material and **in that** the air inlet (2) further comprises at least one acoustic attenuation structure (8) attached to the inner fairing (22) of the annular structure (21, 22).

2. The air inlet according to claim 1, wherein the air inlet (2) comprises an intermediate junction (21B) connected to said at least one portion (21A) of the outer fairing (21) to form the outer fairing (21), the intermediate junction (21B) being connected to the rear partition (23).

3. The air inlet according to claim 2, wherein said at least one portion (21A) of the outer fairing and the intermediate junction (21B) are of continuity of material.

4. The air inlet according to any of the preceding claims, wherein the inner fairing (22) is perforated over an area (22D) receiving said at least one acoustic attenuation structure (8) and in that said at least one attached acoustic attenuation structure (8) is formed by a honeycomb core (80) and an acoustically resistive wall (82).

5. The air inlet according to any of claims 1 to 3, wherein it comprises a step (9) formed in an area extending from a portion of the air inlet lip (20) and a portion of the inner fairing (22), the step (9) being configured to accommodate said at least one acoustic attenuation structure (8).

6. The air inlet according to claim 5, wherein said at least one acoustic attenuation structure (8) is formed by a perforated wall (81) flush with the air inlet lip (20) and a honeycomb core (80).

7. The air inlet according to claim 5 or 6, wherein the step (9) is formed in an area delimiting the air inlet lip (20) and the inner fairing (22).

8. The air inlet according to any of claims 5 or 6, wherein the step (9) is formed in the air inlet lip (20) and said at least one acoustic attenuation structure (8) extends into the air inlet lip (20).

9. The air inlet according to any of claims 1 to 8, wherein it comprises a front partition (24) at least partially delimiting the air inlet lip (20).

10. The air inlet according to the preceding claim taken in combination with claim 5, wherein the front partition (24) rests on the step (9).

11. A method for manufacturing an annular structure (21, 22) and an air inlet lip (20) according to any one of the preceding claims, wherein an annular structure (21, 22) including an inner fairing (22) and at least one portion (21A) of an outer fairing (21) is made by continuity of material with the air inlet lip (20).

12. The manufacturing method according to claim 11, wherein said annular structure (21, 22) and said air inlet lip (20) are made by means of a mold (100) in one piece.

13. The manufacturing method according to claim 11, wherein said annular structure (21, 22) and said air inlet lip (20) are made by means of a mold (100) comprising a first portion (110) and a second portion (120).

14. The manufacturing method according to the preceding claim, wherein the first portion (110) of the mold (100) is intended to form the air inlet lip (20) and said least one portion (21A) of the outer fairing of the annular structure (21, 22) and the second portion (120) of the mold (100) is intended to form the inner fairing (22) of the annular structure (21, 22).

15. The manufacturing method according to the preceding claim, wherein the second portion (120) is configured to form a step (9) according to the object of claim 10 in an area extending between the air inlet lip (20) and the inner fairing (22).

16. The manufacturing method according to any one of claims 11 to 15, wherein the method comprises a step of perforating an area of the inner fairing intended to receive an acoustic attenuation structure (8).

17. The manufacturing method according to any one of claims 11 to 16, wherein the method comprises a step in which an acoustic attenuation structure (8) is attached to the inner fairing (22) of the air inlet (1).
